# EUROPEAN PATENT APPLICATION

(11) **EP 4 207 221 A1**
(43) Date of publication of application: **05.07.2023**
(21) Application number: 22217231.4
(22) Date of filing: 29.12.2022
(51) Int. Cl.: H01F 7/02, H02K 7/075

(54) **MAGNETIC DRIVING APPARATUS**

(30) Priority: 30.12.2021 CN 202111649736
(71) Applicant: Chang, Li, Taichung City 407332 (TW)
(72) Inventor: Chang, Li, Taichung City 407332 (TW)
(74) Representative: Lang, Christian

(57) **Abstract**

A magnetic driving apparatus includes a base, at least one passive magnetic unit, and a switching unit. The at least one passive magnetic unit includes two passive magnets movable on the base and a translation-to-rotation device for interconnecting the passive magnets. The switching unit includes two active magnetic units, and a driving unit. The passive magnets are located between the active magnetic units. Each of the active magnetic units includes at least two active magnets. The amount of the active magnets of each of the active magnetic units is the amount of the at least one passive magnetic unit plus one. The driving unit reciprocates the active magnetic units between two positions relative to the at least one passive magnetic unit so that the active magnets reciprocate the passive magnets.

## Description

### BACKGROUND OF INVENTION

### 1. FIELD OF INVENTION

The present invention relates to conversion of energy and, more particularly, to a magnetic driving apparatus for conversion of energy.

### 2. RELATED PRIOR ART

Various magnetic driving apparatuses have been devised to improve efficiencies of operation. Atypical magnetic driving apparatus includes an active magnetic unit and a passive magnetic unit. Magnetic repulsion and attraction are used alternately between the active and passive magnetic units. Thus, the passive magnetic unit is movable relative to the active magnetic unit. The kinetic energy of the passive magnetic unit can be converted into another type of energy to be used by another apparatus.

In a range of effective magnetism, it is more efficient to control the magnetic repulsion in the shortest distance than the magnetic attraction at the longest distance. Therefore, the primary issue is to effectively control the magnetic repulsion. According to Lenz's law, a change in magnetic flux generates an electric current that tends to fight against the change in the magnetic flux. Therefore, resistance occurs when magnetic poles of the active magnetic unit are switched, and a force is required to overcome the resistance. This is troublesome and affects the rate of the switch of the magnetic poles.

Therefore, the present invention is intended to obviate or at least alleviate the problems encountered in the prior art.

### SUMMARY OF INVENTION

It is an objective of the present invention to provide a magnetic driving apparatus in which magnetic poles are synchronously switched so that magnetic attraction and repulsion are used to pull and push an element.

It is another objective of the present invention to provide a magnetic driving apparatus in which magnetic poles are smoothly switched to render the operation of the magnetic driving apparatus efficient.

To achieve the foregoing objectives, the magnetic driving apparatus includes a base, at least one passive magnetic unit, and a switching unit. The at least one passive magnetic unit includes two passive magnets movable on the base and a translation-to-rotation device for interconnecting the passive magnets. The switching unit includes two active magnetic units, and a driving unit. The passive magnets are located between the active magnetic units. Each of the active magnetic units includes at least two active magnets. The amount of the active magnets of each of the active magnetic units is the amount of the at least one passive magnetic unit plus one. The driving unit reciprocates the active magnetic units between two positions relative to the at least one passive magnetic unit so that the active magnets reciprocate the passive magnets.

Other objectives, advantages and features of the present invention will be apparent from the following description referring to the attached drawings.

### BRIEF DESCRIPTION OF DRAWINGS

The present invention will be described via detailed illustration of embodiments referring to the drawings wherein:
FIG. 1 is a perspective view of a magnetic driving apparatus according to an embodiment of the present invention;
FIG. 2 is an exploded view of the magnetic driving apparatus shown in FIG. 1;
FIG. 3 is a perspective view of the magnetic driving apparatus in another position than shown in FIG. 1;
FIG. 4 is a perspective view of the magnetic driving apparatus in another position than shown in FIG. 3;
FIG. 5 is a perspective view of a magnetic driving apparatus according to another embodiment of the present invention;
FIG. 6 is an exploded view of the magnetic driving apparatus shown in FIG. 5;
FIG. 7 is a top view of a magnetic driving apparatus according to the third embodiment of the present invention;
FIG. 8 is a side view of the magnetic driving apparatus of FIG. 7;
FIG. 9 is a top view of a magnetic driving apparatus according to another embodiment of the present invention; and
FIG. 10 is a top view of a magnetic driving apparatus according to another embodiment of the present invention.

### DETAILED DESCRIPTION OF EMBODIMENTS

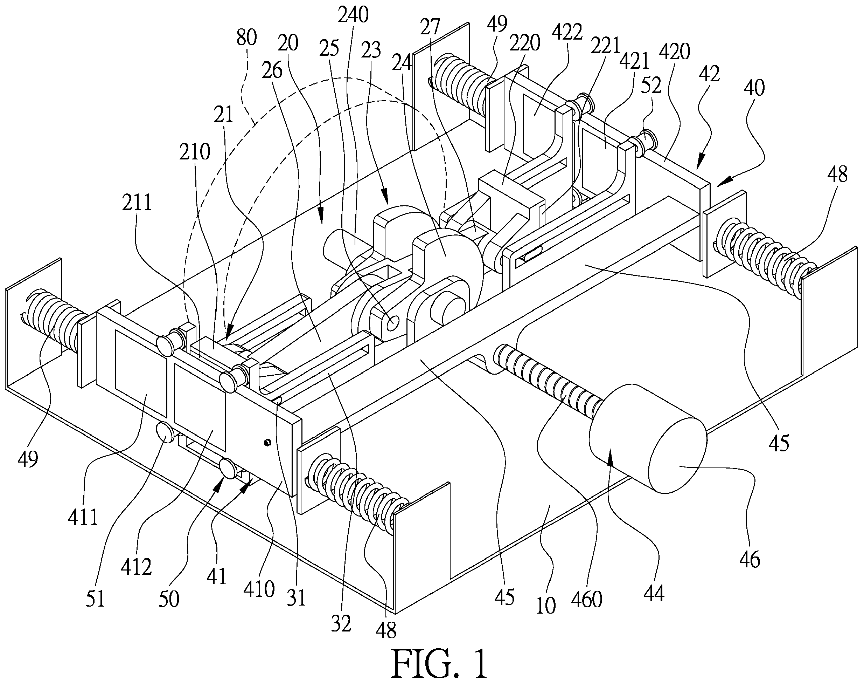

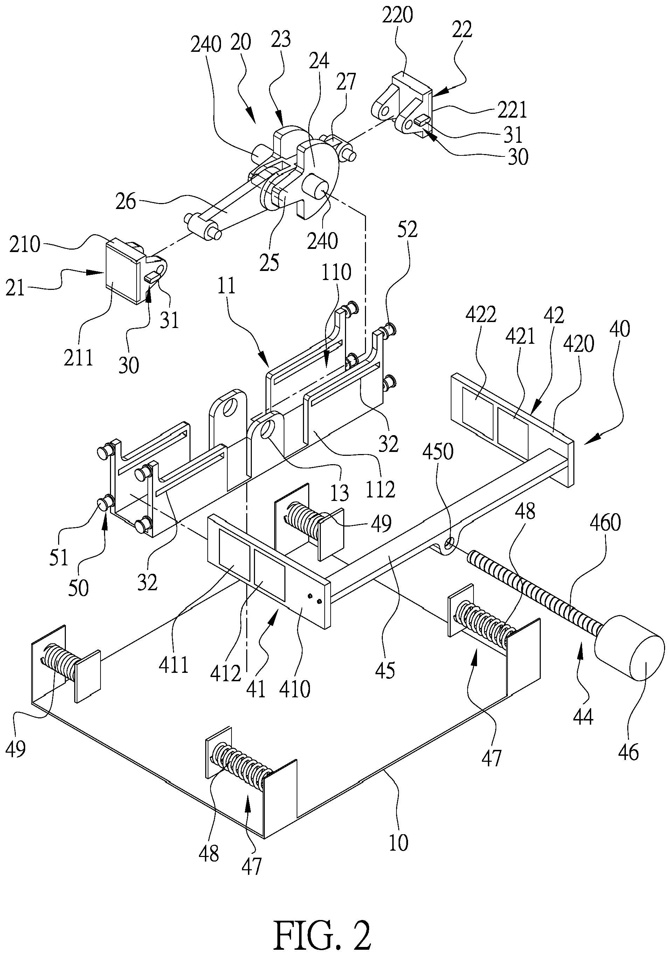

Referring to FIGS. 1 and 2, a magnetic driving apparatus includes a base 10, a passive magnetic unit 20, and a switching unit 40 according to a first embodiment of the present invention. The magnetic driving apparatus is operable to provide generate kinetic energy for a translational or rotational power output unit 80 such as a piston and a gear.

At least one support 11 is located on the base 10. The following description will be given to only one support 11 for briefness and clarity. The support 11 includes two edges in parallel to each other. A lug 13 is formed between two walls 112 extending from each of the edges of the support 11. The support 11 includes a space 110 between the edges. The space 110 receives the passive magnetic unit 20.

The passive magnetic unit 20 includes a translation-to-rotation device 23 arranged between two passive magnetic devices 21 and 22. The translation-to-rotation device 23 is located in the space 110. Magnetism is used to reciprocate the passive magnetic devices 21 and 22 in and along the space 110. Preferably, the translation-to-rotation device 23 converts the reciprocation of the passive magnetic devices 21 and 22 into rotation.

In the first embodiment, the passive magnetic device 21 includes a positively oriented magnet 211 attached to a sliding element 210, and the passive magnetic device 22 includes a negatively oriented magnet 221 attached to a sliding element 220. For example, the term "positively oriented" means that the N pole of a magnet is pointed at the left lower corner in FIG. 2, and the term "negatively oriented" means that the N pole of a magnet is pointed at the right upper corner in FIG. 2.

Each of the passive magnetic devices 21 and 22 is provided with a translation device 30. Each of the translation device 30 includes two opposite fins 31 extending from the sliding element 210 or 220 and a slot 32 made in each of the walls 112 of the base 10. The fins 31 are inserted in the slots 32, thereby rendering the sliding elements 210 and 220 smoothly translatable along the base 10.

The translation-to-rotation device 23 includes a crankshaft 24 between two swinging rods 26 and 27. The crankshaft 24 includes two output axles 240 respectively extending from two cranks 25. The output axles 240 are connected to the lugs 13 of the support 11. The swinging rods 26 and 27 are respectively connected to the sliding elements 211 and 221. Thus, translation of the passive magnetic devices 21 and 22 is converted to rotation of the output axles 240 of the crankshaft 24. A power output unit 80 is connected to the crankshaft 24.

The switching unit 40 includes two active magnetic units 41 and 42, a driving unit 44 and an energy storage 47. The active magnetic unit 41 includes two magnets 411 and 412 attached to a plate 410. The active magnetic unit 42 includes two magnets 421 and 422 attached to a plate 420. The plates 410 and 420 are connected to each other by a bar 45. The magnets 412 and 421 are positively oriented magnets, and the magnets 411 and 422 are negatively oriented magnets.

The driving unit 44 includes a bar 45 and a servomotor 46. The interconnects to the plates 410 and 420 so that the plates 410 and 420 are in parallel to each other. The bar 45 is made with a screw hole 450. A threaded rod 460 includes a section inserted in the screw hole 450 and another section operatively connected to the servomotor 46. The servomotor 46 is operable to rotate the threaded rod 460 alternately in two opposite directions to reciprocate the bar 45 and the active magnetic units 41 and 42 between two positions relative to the base 10.

In the first embodiment, the negatively oriented magnet 411 faces the negatively oriented magnet 422, and the positively oriented magnet 412 faces the positively oriented magnet 421.

The passive magnetic unit 20 is located between the plates 410 and 420 of the switching unit 40. The positively oriented magnet 211 is adjacent to the plate 410 and the negatively oriented magnet 221 is adjacent to the plate 420.

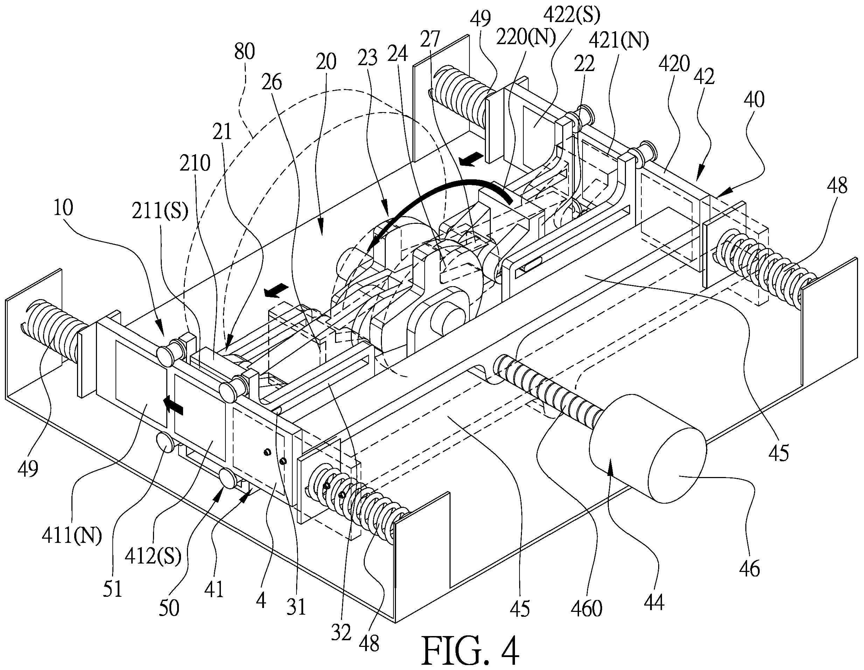

Referring to FIGS. 1 and 4, the active magnetic units 41 and 42 are in the first position. The positively oriented magnet 412 faces and attracts the positively oriented magnet 211, and the positively oriented magnet 421 faces and repulses the negatively oriented magnet 221. Thus, the sliding elements 210 and 220 move toward the plate 420 from the plate 410 as indicated by an arrowhead, thereby rotating the crankshaft 24 via the switching rods 26 and 27.

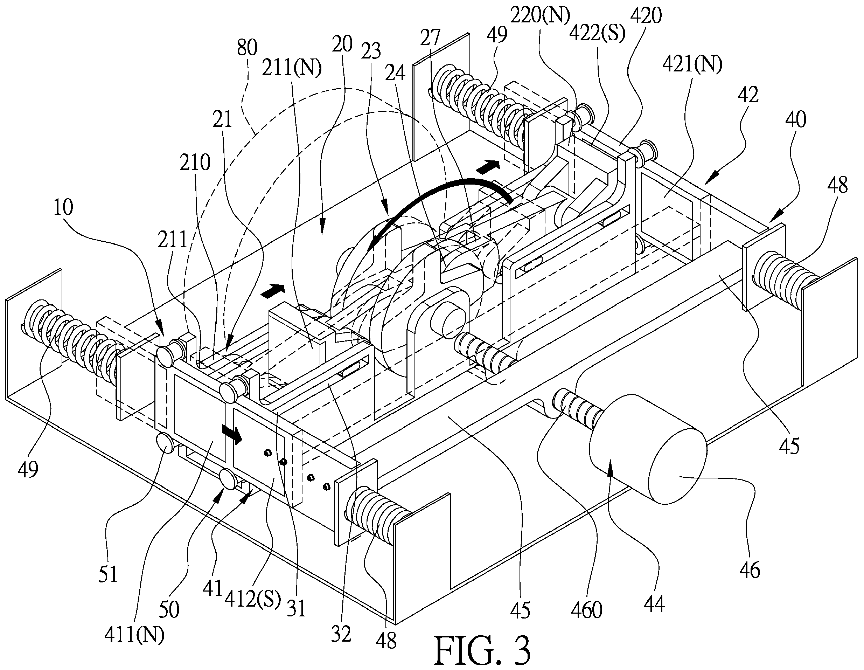

Referring to FIG. 3, the active magnetic units 41 and 42 are in the second position. The negatively oriented magnet 411 faces and repulses the positively oriented magnet 211, and the negatively oriented magnet 422 faces and attracts the negatively oriented magnet 221. Thus, the sliding elements 210 and 220 move toward the plate 410 from the plate 420 as indicated by another arrowhead, thereby rotating the crankshaft 24 via the switching rods 26 and 27.

The energy storage 47 includes two springs 48 and two springs 49 on the base 10. The springs 48 are adjacent to an edge of the base 10. The springs 49 are adjacent to an opposite edge of the base 10. When the active magnetic units 41 and 42 are in the first position, the springs 49 are compressed and store energy, ready for releasing the energy to move the active magnetic units 41 and 42 to the second position. When the active magnetic units 41 and 42 are in the second position, the springs 48 are compressed and store energy, ready for releasing the energy to move the active magnetic units 41 and 42 to the first position.

A sliding mechanism 50 is used to reduce loss of energy during the movement of the active magnetic units 41 and 42. The sliding mechanism 50 includes casters 51 attached to an end of the support 11 and casters 52connected to an opposite of the support. The casters 51 and 52 are like one another except for their positions. Some of the casters 51 are located at an upper edge of the plate 410. The other casters 51 are located at a lower edge of the plate 410. Some of the casters 52 are located at an upper edge of the plate 420. The other casters 52 are located at a lower edge of the plate 420. The casters 51 and 52 reduce friction between the support 11 and the plates 410 and 420 during the movement of the active magnetic units 41 and 42.

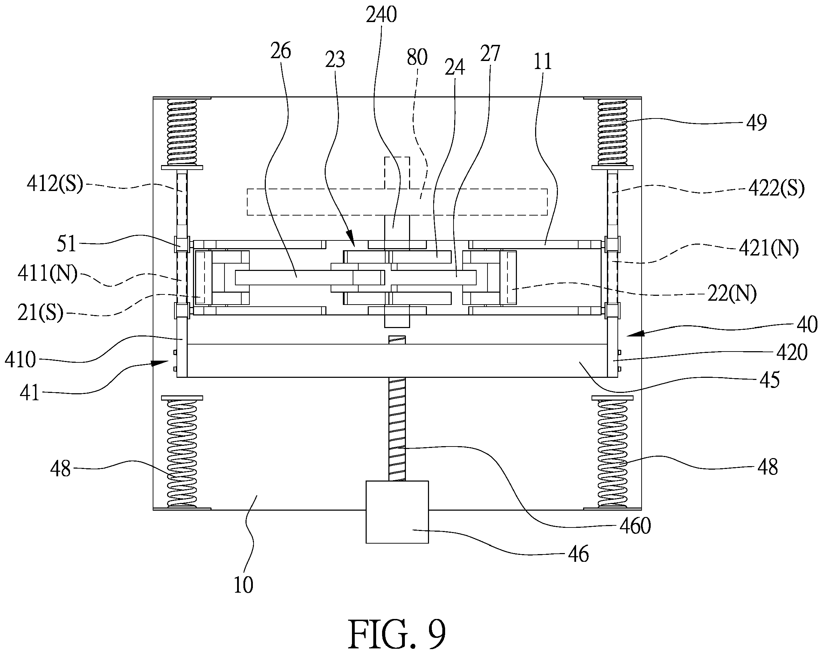

Referring to FIG. 9, there is shown a magnetic driving apparatus according to a second embodiment of the present invention. The second embodiment is like the first embodiment except for two things. Firstly, the magnet 211 is a negatively oriented magnet. Secondly, the magnets 411 and 412 are interchanged in position. Thus, the negatively oriented magnet 411 faces the positively oriented magnet 421, and the positively oriented magnet 412 faces the negatively oriented magnet 422.

When the active magnetic units 41 and 42 are in the first position, the negatively oriented magnet 411 attracts the positively oriented magnet 211, and the positively oriented magnet 421 repulses the negatively oriented magnet 221. Thus, the sliding elements 210 and 220 move toward the plate 410 from the plate 420 and rotate the crankshaft 24 via the switching rods 26 and 27.

When the active magnetic units 41 and 42 are in the second position. The positively oriented magnet 412 repulses the negatively oriented magnet 211, and the negatively oriented magnet 422 attracts the negatively oriented magnet 221. Thus, the sliding elements 210 and 220 move toward the plate 420 from the plate 410 and rotate the crankshaft 24 via the switching rods 26 and 27.

In both the first and second embodiments, when the active magnetic units 41 and 42 are in the first position, the sliding elements 210 and 220 move toward the plate 410 from the plate 420 and rotate the crankshaft 24 via the switching rods 26 and 27. When the active magnetic units 41 and 42 are in the second position, the sliding elements 210 and 220 move toward the plate 420 from the plate 410 and rotate the crankshaft 24 via the switching rods 26 and 27. The sliding elements 210 and 220 reciprocate between the plates 410 and 420 to continuously rotate the crankshaft 24 via the switching rods 26 and 27 as the switching unit 40 reciprocates the active magnetic units 41 and 42 between the first and second positions relative to the base 10.

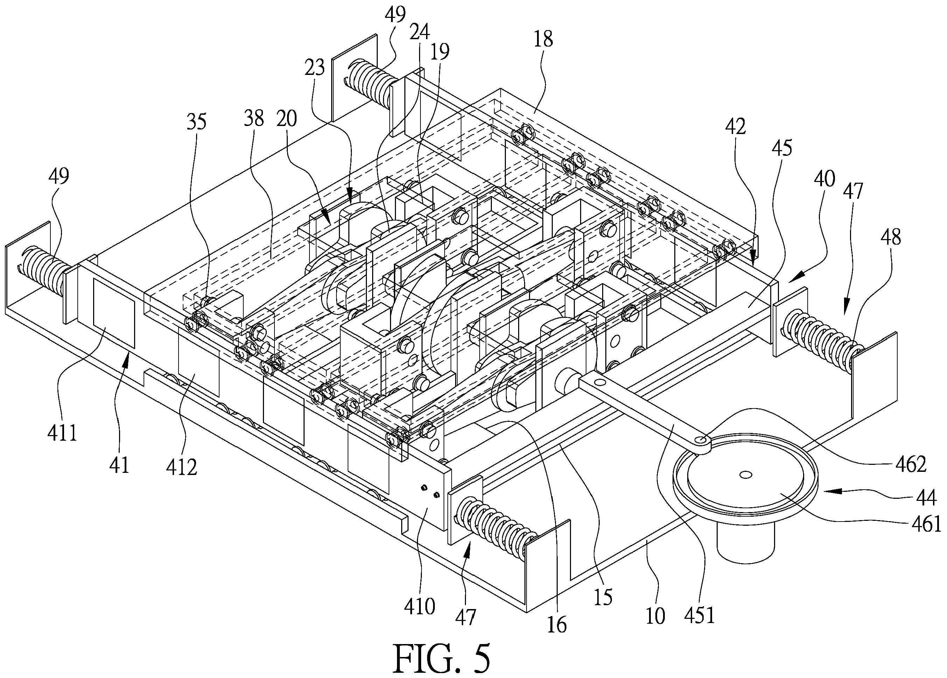

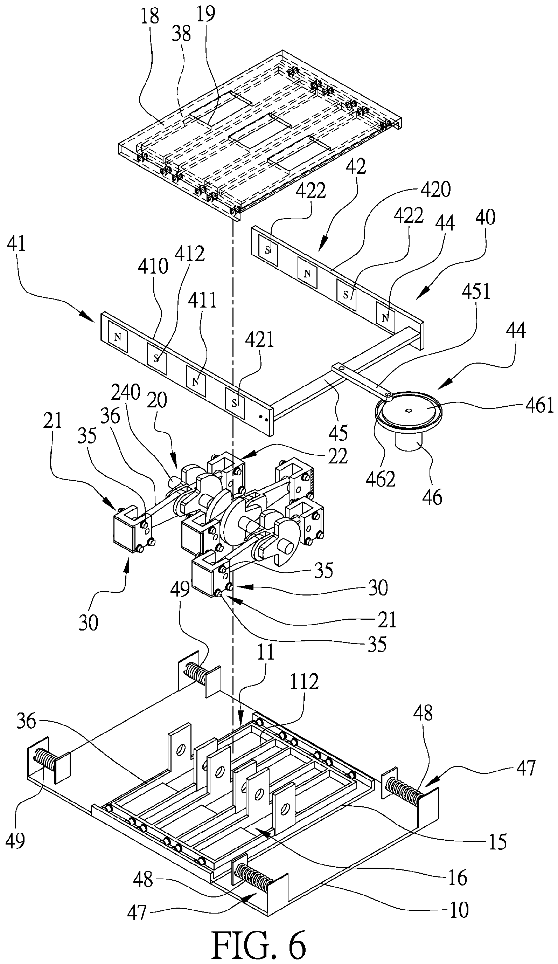

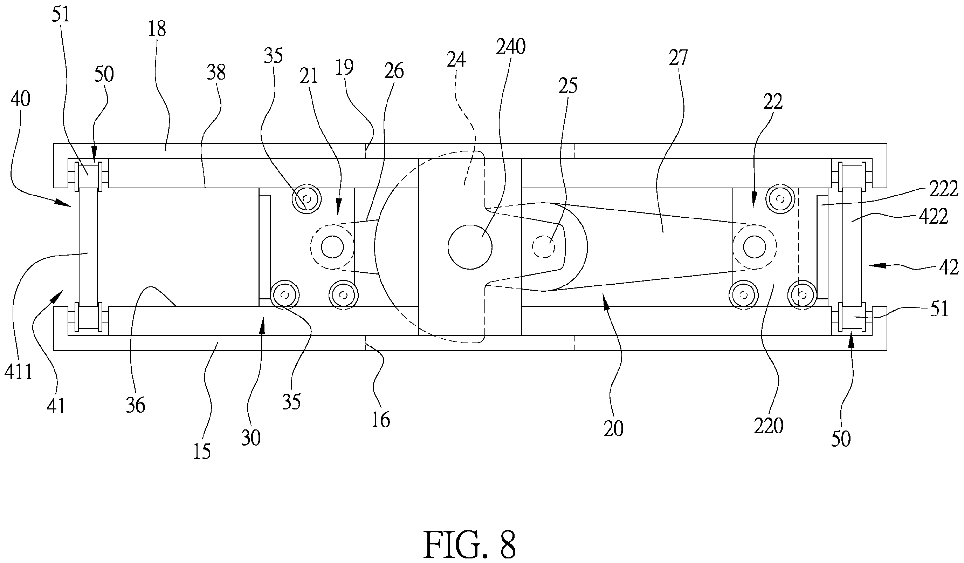

Referring to FIGS. 5 through 8, there is shown a magnetic driving apparatus according to a third embodiment of the present invention. The third embodiment is like the first embodiment except for four things. Firstly, an axis of the servomotor 46 extends vertically, the servomotor 46 is operatively connected to a disc 461, and a connecting rod 451 is used. The connecting rod 451 includes a section pivotally connected to a peripheral portion 462 of the disc 461 and another section pivotally connected to the bar 45. Thus, the motor 46 is operable to rotate the disc 461, thereby reciprocating the bar 45 and the plates 42 via the connecting rod 451.

Secondly, there are three (3) passive magnetic units 20, the active magnetic unit 41 includes two negatively oriented magnets 411 and two positively oriented magnets 412, and the active magnetic unit 42 includes two positively oriented magnets 421 and two negatively oriented magnets 422. The negatively oriented magnets 411 are alternate with the positively oriented magnets 412. The positively oriented magnets 421 are alternate with the negatively oriented magnets 422. Each of the negatively oriented magnets 411 faces one of the negatively oriented magnets 422. Each of the positively oriented magnets 412 faces one of the positively oriented magnets 421.

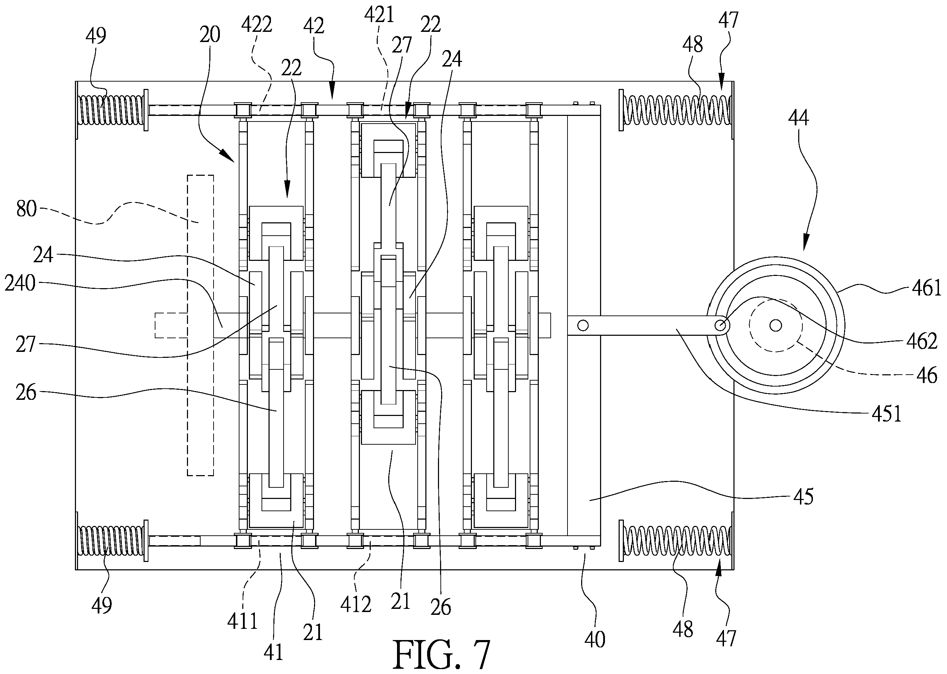

Referring to FIG. 7, the active magnetic units 41 and 42 are in the first position. For clarity, the passive magnetic units 20 will sequentially be referred to as the first, second and third passive magnetic units 20. Each of the first and third passive magnetic units 20 is located between one of the positively oriented magnets 412 and one of the positively oriented magnets 421. The second passive magnetic unit 20 is located between one of the negatively oriented magnets 411 and one of the negatively oriented magnets 422.

The positively oriented magnets 412 attract the positively oriented magnets 211 of the first and third passive magnetic units 20, and the positively oriented magnets 421 repulse the negatively oriented magnets 221 of the first and third passive magnetic units 20. Synchronously, one of the negatively oriented magnets 411 repulses the positively oriented magnet 211 of the second passive magnetic unit 20, and one of the negatively oriented magnets 422 attracts the negatively oriented magnet 221 of the second passive magnetic unit 20. Thus, the sliding elements 210 and 220 rotate the crankshaft 24 via the switching rods 26 and 27.

When the active magnetic units 41 and 42 are in the second position, each of the first and third passive magnetic units 20 is located between one of the negatively oriented magnets 411 and one of the negatively oriented magnets 422. The second passive magnetic unit 20 is located between one of the positively oriented magnets 412 and one of the positively oriented magnets 421.

The negatively oriented magnets 411 repulse the positively oriented magnets 211 of the first and third passive magnetic units 20, and the negatively oriented magnets 422 attract the negatively oriented magnets 221 of the first and third passive magnetic units 20. Synchronously, one of the positively oriented magnets 412 attracts the positively oriented magnet 211 of the second passive magnetic unit 20, and one of the positively oriented magnets 421 repulses the negatively oriented magnet 221 of the second passive magnetic unit 20. Thus, the sliding elements 210 and 220 rotate the crankshaft 24 via the switching rods 26 and 27.

Thirdly, a housing is used to cover and guide the passive magnetic units 20 and the active magnetic units 41 and 42. The housing includes a combined support 15 and a lid 18. The combined support 15 is located on the base 10. The combined support 15 is an assembly of three supports 11 (FIG. 2). Each of the supports 11 includes a groove 16 to receive one of the passive magnetic units 20. The lid 18 is located on the combined support 15.

Fourthly, each of the sliding elements 210 and 220 includes at least two casters 35 instead of the fins 31. The casters 35 are operable to roll on the walls 112 of the supports 11 to reduce friction between the sliding elements 210 and 220 and the supports 11.

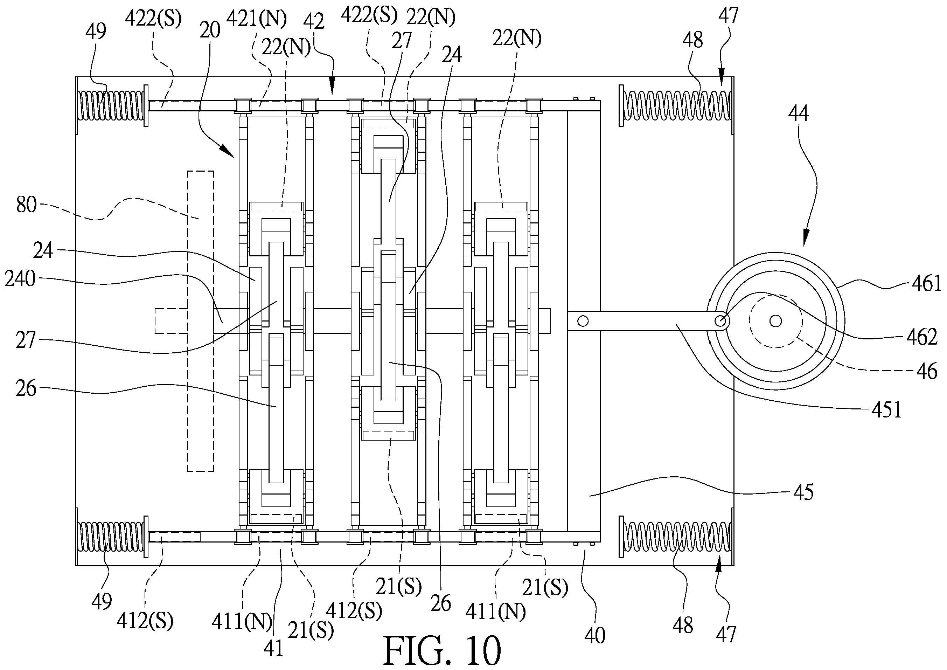

Referring to FIG. 10, there is shown a magnetic driving apparatus according to a fourth embodiment of the present invention. The fourth embodiment is like the third embodiment except for two things. Firstly, the magnet 221 of each of the passive magnetic units 20 is a negatively oriented magnet. Secondly, the positively oriented magnets 412 are interchanged with the negatively oriented magnets 411 in position. Thus, the negatively oriented magnets 411 face the positively oriented magnets 421, and the positively oriented magnets 412 face the negatively oriented magnets 422.

When the active magnetic units 41 and 42 are in the first position, each of the first and third passive magnetic units 20 is located between one of the negatively oriented magnets 411 and one of the positively oriented magnets 421. The second passive magnetic unit 20 is located between one of the positively oriented magnets 412 and one of the negatively oriented magnets 422.

The negatively oriented magnets 411 attract the negatively oriented magnets 211 of the first and third passive magnetic units 20, and the negatively oriented magnets 421 repulse the negatively oriented magnets 221 of the first and third passive magnetic units 20. Synchronously, one of the positively oriented magnets 412 repulses the negatively oriented magnet 211 of the second passive magnetic unit 20, and one of the negatively oriented magnets 422 attracts the negatively oriented magnet 221 of the second passive magnetic unit 20. Thus, the sliding elements 210 and 220 move rotate the crankshaft 24 via the switching rods 26 and 27.

When the active magnetic units 41 and 42 are in the second position. Each of the first and third passive magnetic units 20 is located between one of the positively oriented magnets 412 and one of the negatively oriented magnets 422. The second passive magnetic unit 20 is located between one of the negatively oriented magnets 411 and one of the positively oriented magnets 421.

The positively oriented magnets 412 repulse the negatively oriented magnets 211 of the first and third passive magnetic units 20, and the negatively oriented magnets 422 attract the negatively oriented magnets 221 of the first and third passive magnetic units 20. Synchronously, one of the negatively oriented magnets 411 attracts the negatively oriented magnet 211 of the second passive magnetic unit 20, and one of the positively oriented magnets 421 repulses the negatively oriented magnet 221 of the second passive magnetic unit 20. Thus, the sliding elements 210 and 220 move and rotate the crankshaft 24 via the switching rods 26 and 27.

It should be noted that the amount of the magnets attached to the plates 410 or 420 is the amount of the passive magnetic units 20 plus one (1). For example, in the first embodiment, the amount of the magnets on the plate 410 or 420 is two (2) as there is only one (1) passive magnetic unit 20. In the third embodiment, the amount of the magnets on the plate 410 or 420 are four (4) as there are three (3) passive magnetic units 20.

The present invention has been described via the illustration of the embodiments. Those skilled in the art can derive variations from the embodiments without departing from the scope of the present invention. Therefore, the embodiments shall not limit the scope of the present invention defined in the claims.

## Claims

1. A magnetic driving apparatus comprising:
a base (10);
at least one passive magnetic unit (20) comprising two passive magnets (211, 221) movable on the base (10) and a translation-to-rotation device (23) for interconnecting the passive magnets (211, 221); and
a switching unit (40) comprising:
two active magnetic units (41, 42) on two opposite sides of the passive magnets (211, 221), wherein each of the active magnetic units (41, 42) comprises at least two active magnets (411, 412, 421, 422), and the amount of the active magnets (411, 412, 421, 422) of each of the active magnetic units (41, 42) is the amount of the at least one passive magnetic unit (20) plus one; and
a driving unit (44) for reciprocating the active magnetic units (41, 42) between two positions relative to the at least one passive magnetic unit (20) so that the active magnets (411, 412, 421, 422) reciprocate the passive magnets (211, 222).

2. The magnetic driving apparatus according to claim 1, wherein adjacent two of the active magnets (411, 412, 421, 422) of each of the first and second active magnetic units (41, 42) are oriented in opposite directions.

3. The magnetic driving apparatus according to claim 1, wherein the at least one passive magnetic unit (20) comprises two sliding elements (210, 220) connected to the first and second passive magnets (211, 221).

4. The magnetic driving apparatus according to claim 3, wherein the at least one passive magnetic unit (20) comprises a support (11) formed with two walls (112) each of which comprises a slot (32), and each of the sliding elements (210, 220) comprises two fins (31) movable in the slots (32).

5. The magnetic driving apparatus according to claim 3, wherein the at least one passive magnetic unit (20) comprises a support (11) formed with two walls (112), and each of the sliding elements (210, 220) comprises two casters (35) for rolling on the walls (112).

6. The magnetic driving apparatus according to claim 5, wherein the at least one passive magnetic unit (20) comprises a lid (18) for covering the support (11) further comprises and the casters (35).

7. The magnetic driving apparatus according to claim 3, wherein the translation-to-rotation device (23) comprises two swinging rods (26) connected to the sliding elements (210, 220) and a crankshaft (24) connected to the swinging rods (26, 27), wherein the crankshaft (24) comprises output axle (240) connected to a power output unit (80).

8. The magnetic driving apparatus according to claim 1, wherein the switching unit (40) further comprises an energy storage (47) comprising at least two energy-storing elements (48, 49), wherein when the first and second active magnetic units (41, 41) are in each of the positions, one of the energy-storing elements (48, 49) reserves energy for moving the first and second active magnetic units (41, 41) to a remaining one of the positions.

9. The magnetic driving apparatus according to claim 8, wherein each of the energy-storing elements (48, 49) is a compression spring comprising an end connected to the base (10) and another end for contact with the first and second active magnetic units (41, 42).

10. The magnetic driving apparatus according to claim 1, wherein the driving unit (44) comprising:
a bar (45) connected to the first and second active magnetic units (41, 42) and
formed with a screw hole (450);
a threaded rod (460) inserted in the screw hole (450); and
a servomotor (46) connected to the threaded rod (460).

11. The magnetic driving apparatus according to claim 1, wherein the driving unit (44) comprising:
a bar (45) connected to the first and second active magnetic units (41, 42) and
formed with a screw hole (450);
a motor (46);
a disc (461) coaxially connected to the motor (46); and
a connecting rod (451) comprising an end pivotally connected to a peripheral portion of the disc (461) and another end pivotally connected to the bar (45).

12. The magnetic driving apparatus according to claim 4, wherein each of the first and second active magnetic units (41, 42) comprises a plate (410, 420) connected to the active magnets (411, 412, 421, 422), and the support (11) comprises at least two casters (51, 52) each of which rolls along an edge of the plate (410, 420) of one of the first and second active magnetic units (41, 42).

13. The magnetic driving apparatus according to claim 1, comprising multiple passive magnetic units (20) supported on the base (10).
